# EUROPEAN PATENT SPECIFICATION

(11) **EP 2 042 262 B1**
(45) Date of publication and mention of the grant of the patent: **19.01.2011**
(21) Application number: 08015064.2
(22) Date of filing: 26.08.2008
(51) Int. Cl.: B23P 19/06, B25B 23/14

(54) **Bolt fastening method, computer program product and apparatus**
Bolzenschließverfahren, Computerprogrammprodukt und Vorrichtung
Procédé de fermeture à verrou, produit de programme informatique et appareil

(30) Priority: 25.09.2007 JP 2007247824
(43) Date of publication of application: 01.04.2009
(73) Proprietor: Mazda Motor Corporation, Fuchu-cho Aki-gun Hiroshima 730-8670 (JP)
(72) Inventor: Makimae, Tatsumi, Aki-gun Hiroshima 730-8670 (JP); Fujii, Yutaka, Aki-gun Hiroshima 730-8670 (JP)
(74) Representative: Müller-Boré & Partner Patentanwälte

(56) References cited:
- EP-A- 0 171 058
- JP-A- 2 124 278
- JP-A- 6 285 726
- US-A- 4 333 220

## Description

The present invention relates to a bolt fastening method, computer program product and apparatus.

An example of a method and an apparatus as per the preamble of claims 1 and 9, is disclosed by US 4 330 220 A.

A bolt fastening method in which a bolt is fastened up to a plasticity area and then it is unfastened by a specified angle or more, which is shown in Japanese Patent Laid-Open Publication No. 10-299740, has been proposed. Thereby, plastic elongation of the bolt can be prevented even if any external force (thermal stress at warming up) acts on the bolt, so that a fastening shaft force of the bolt (a tension force acting in a bolt's shaft direction) may not decrease even after the above-described external force acting on the bolt has been removed (bolt's contraction due to cooling down).

The plasticity-area angle method is known as the bolt fastening method is known. According to this method, the bolt is fastened up to a specified torque once and then it is further fastened by a specified fastening angle up to the plasticity area. Thereby, the final fastening shaft force of the bolt can be made constant eventually with the final plasticity-area fastening even if the initial specified-fastening-angle fastening shows instability in the fastening shaft force. The plasticity-area angle method, however, has a problem in that acting of the external force, such as the thermal stress, on the bolt may cause a plastic expansion of the bolt, so that the produced plastic expansion may not diminish after the removal of the external force. As a result, the fastening shaft force of the bolt would improperly decrease.

It may be considered for solving the above-described problem that fastening the bolt in an elasticity area according to the elasticity-area torque method, the elasticity-area angle method, or the like is applied. This elasticity-area fastening would not cause any plastic deformation, so that the above-described improper decrease of the fastening shaft force at the removal of the external force could be prevented.

Herein, there generally also exists a fastened member in addition to the bolt when the bolt fastening is conducted. This fastened member generally has its hardness which is lower (softer) than that of the bolt, so that there is a concern that the fastened member would have the plastic deformation due to the acting of the external force such as the thermal stress even if the fastened member was used in its elasticity area. Accordingly, in the event that the plastic deformation occurs to the fastened member, the contraction of the fastened member could be prevented after the removal of the external force, so that the decrease of the fastening shaft force of the bolt would be caused.

US 4,333,220 A discloses a method and apparatus for tightening an assembly including a pre-load indicating fastener. Pre-load indicating fasteners are generally tightened until a crushable element, forming a portion of the pre-load indicating fastener, is plastically deformed. The subject of said documents permits fasteners to be tightened until the crushable element of the fastener is completely deformed.

The present invention has been devised in view of the above-described matters, and an object of the present invention is to provide a bolt fastening method which can properly prevent the decrease of the fastening shaft force of the bolt caused by the plastic deformation of the fastened member. Another object of the present invention is to provide a bolt fastening apparatus which uses the above-described bolt fastening method.

These objects are solved according to the present invention by the features of the independent claims 1, 8 and 9. Preferred embodiments of the present invention are subject of the dependent claims.

According to a first aspect of the present invention, there is provided a bolt fastening method of fastening a fastened member with a bolt, comprising an initial fastening step, in which the bolt is fastened in an elasticity area thereof such that the fastened member has a plastic deformation, a final fastening step, in which the bolt is unfastened by a specified amount from a state of the bolt fastened in the initial step and then the bolt is fastened again in a state in which each of the bolt and the fastened member rests in an elasticity area thereof, whereby the fastened member can be fastened with the bolt.

According to the present invention, since the elasticity limit (limit of the yieldingness resistance) of the fastened member (bolt's seat face) increases (the elasticity area expands) due to the plastic deformation of the fastened member in the initial fastening step, the plastic deformation (yieldingness) of the fastened member can be properly prevented from progressing even if the external force (e.g., a load of the thermal stress) acts after the final fastening step. Thus, the decrease of the fastening shaft force of the bolt caused by the plastic deformation of the fastened member can be prevented properly despite the removal of the external force (e.g., the load of the thermal stress). Herein, of course, since the fastening of the bolt is conducted in its elasticity area and the hardness of the bolt is higher (harder) than that of the fastened member, the external force may not cause any improper plastic deformation to the bolt. Thus, no decrease of the fastening shaft force of the bolt due to the bolt's plastic deformation may occur.

According to an embodiment of the present invention, the final fastening step follows the initial fastening step. Thereby, the above-described advantages of the present invention can be obtained promptly.

According to another embodiment of the present invention, the bolt fastening method further comprises a bolt unfastening step in which the bolt is unfastened to zero of a fastening shaft force thereof, which is provided after the initial fastening step and before the final fastening step, wherein the final fastening step is configured such that the bolt is fastened again with a smaller fastening angle than in the initial fastening step. Thereby, in addition to the above-described advantages of the present invention, the standard (zero of the fastening shaft force) of fastening for the final fastening state in the final fastening step is made clear, so that the final fastening state can be made properly stable.

According to another embodiment of the present invention, the fastened member comprises a bearing cap to be attached to an attachment body and the bearing cap is fastened to the attachment body with the bolt in the final fastening step, a processing step of processing a shaft hole between the bearing cap and the attachment body is provided after the final fastening step.

Preferably, after the processing step is provided an assembling step of attaching the bearing cap to the attachment body, in which the bolt fastening the bearing cap is unfastened, at least one pair of half-shell metal bearings preferably having a crushable height portion is disposed in the shaft hole, and then the bolt is fastened so as to attach the bearing cap to the attachment body, fastening of the bolt in the assembling step being conducted in the elasticity area of the bolt by applying a specified fastening angle to the bolt which is obtained by adding to a bolt fastening angle in the processing step an additional fastening angle which preferably is large enough to crush a crushable-height portion of the half-shell metal bearings. Thereby, in addition to the above-described advantages of the present invention, the expansion of the metal clearance can be properly prevented.

According to another embodiment of the present invention, the hardness of the bolt is higher (harder) than that of the fastened member. Thereby, the circular shape of the shaft hole can be maintained properly, preventing the deformation (yieldingness) of the fastened member and the decrease of the fastening shaft force of the bolt.

According to another embodiment of the present invention, the rate of thermal expansion of the fastened member is greater than that of the bolt. Thereby, the elasticity limit (limit of yieldingness resistance) of the fastened member increases (the elasticity area expands), so that the plastic deformation of the fastened member which may occur at the thermal stress loading (thermal expansion) can be properly restrained. Accordingly, the improper decrease of the bolt's fastening shaft force due to the plastic deformation at the removal of the thermal stress can be prevented, resulting in the stable fastening shaft force of the bolt.

According to a second aspect of the invention, there is provided a computer program product,preferably embodied on a computer-readable storage medium, as a signal and/or as a data stream, comprising computer-readable instructions which, when loaded and executed on a suitable apparatus, control the apparatus to perform a bolt fastening method of fastening a fastened member with a bolt, according to claims 1 to 7.

According to a third aspect of the present invention, there is provided a bolt fastening apparatus of fastening a fastened member with a bolt, comprising a bolt-fastening adjusting device operative to adjust fastening of the bolt, and a fastening-amount control device operative to control the bolt-fastening adjusting device in such a manner that the bolt is fastened in an elasticity area thereof such that the fastened member has a plastic deformation, then the bolt is unfastened and then the bolt is fastened again in a state in which each of the bolt and the fastened member rests in an elasticity area thereof to provide a final fastening state of the fastened member with the bolt.

According to an embodiment of the third aspect of the present invention, the fastening-amount control device is configured such that fastening of the bolt after the plastic deformation of the fastened member produces the final fastening state.

According to further another embodiment of the third aspect of the present invention, the fastening-amount control device is configured such that the bolt is unfastened to zero of a fastening shaft force thereof when the bolt is unfastened, and the bolt is fastened with a smaller fastening angle than in fastening the bolt to make the fastened member have the plastic deformation when the final fastening state is provided.

Other features, aspects, and advantages of the present invention will become apparent from the following description which refers to the accompanying drawings. It should be understood that even though embodiments are separately described, single features thereof may be combined to additional embodiments.
FIG. **1** is an explanatory diagram explaining a process of decrease of a fastening shaft force of a bolt when an external force is removed after plastic deformation due to the external force.
FIG. **2** is an explanatory diagram explaining a bolt fastening method according to an embodiment.
FIG. **3** is a diagram showing torque characteristics which is obtained by the bolt fastening method according to the embodiment.
FIG. **4** is a diagram showing a state in which an attachment body and a bearing cap are fastened with half-shell metal bearings disposed.
FIG. **5** is a diagram showing a disposition state of the half-shell metal bearings before fastening.
FIG. **6** is an explanatory diagram explaining a plastic deformation step of a fastened member according an example.
FIG. **7** is an explanatory diagram explaining a main fastening step according to the example.
FIG. **8** is an explanatory diagram explaining an additional fastening step with an influential angle according to the example.
FIG. **9** is a diagram showing relationships between a metal crash amount and a metal clearance.
FIG. **10** is a diagram showing conditions of bolt fastening for experiment of FIG. **9**.
FIG. **11** is an explanatory diagram explaining an obtaining method of the amount of influential angle (an additional fastening angle necessary for restraining the mount of metal clearance expansion).

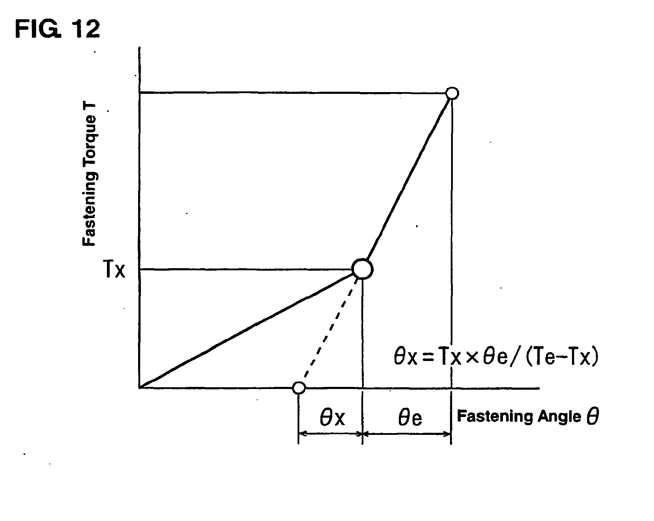

FIG. **12** is an explanatory diagram showing an obtaining step following FIG. **11**.
FIG. **13** is a flowchart specifically explaining the obtaining method of the amount of the influential angle of FIGS. **11** and **12**.
FIG. **14** is an explanatory diagram explaining another obtaining method of the amount of the influential angle.
FIG. **15** is an explanatory diagram showing an obtaining step following FIG. **14**.
FIG. **16** is an explanatory diagram explaining further another obtaining method of the amount of the influential angle.
FIG. **17** is a diagram showing results of stability of an inside diameter of a bearing in accordance with presence of a plastic deformation step of a bearing cap as the fastened member.
FIG. **18** is a diagram showing conditions of fastening for experiment of FIG. **17**.
FIG. **19** is an explanatory diagram explaining a clearance at the additional fastening of the influential angle amount θx.
FIG. **20** is a diagram showing conditions of fastening of FIG. **19**.
FIG. **21** is an explanatory diagram showing a bolt fastening apparatus using the bolt fastening method of the embodiment.

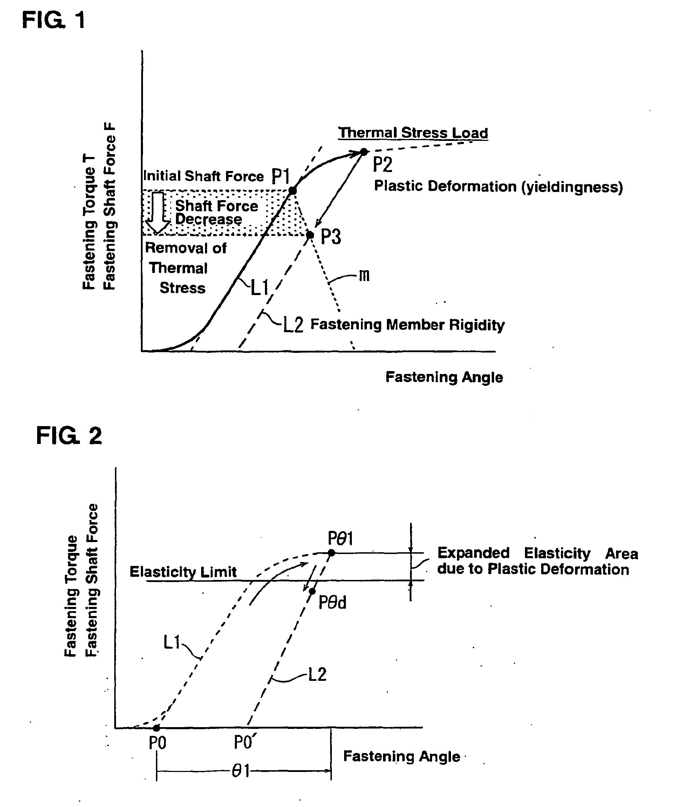

Hereinafter, a preferred embodiment of the present invention will be described referring to the accompanying drawings.
[1] In a bolt fastening method of the embodiment, the bolt is fastened with a bolt rotating device such as a nut runner, and a fastened member is fastened with the bolt. Specifically, a bearing cap (fastened member) as engine bearing parts and a cylinder body as an attachment body may be fastened with the bolt, for example.
[2] According to the bolt fastening method of the embodiment, in an initial fastening step, the bolt preferably is fastened in its elasticity area such that the fastened member has a plastic deformation, and in a final fastening step after the initial fastening step, the bolt preferably is unfastened by a specified (predetermined or predeterminable) amount from a state of the bolt fastened in the initial step and then the bolt is fastened again in a state in which each of the bolt and the fastened member rests substantially in an elasticity area thereof, whereby the fastened member can be fastened with the bolt.
   (i) The reason for providing the above-described initial step is to increase the elasticity limit (limit of yieldingness resistance) of the fastened member, thereby expanding the elasticity area of the fastened member.
   (ii) The reason for providing the above-described final step is to prevent the plastic deformation of the fastened member, by allowing its proper expansion or contraction in the expanded elasticity area according to action (acting) or removal of an external force. Thereby, decrease of the fastening shaft force due to the plastic deformation can be prevented properly.
   (iii) Herein, the reason for conducting the bolt fastening in the bolt's elasticity area in both the initial step and the final fastening step is to prevent the plastic deformation of the bolt, by allowing the bolt's proper expansion or contraction according to action (acting) or removal of the external force such as the thermal stress.
   (iv) The details will be described. Generally, even if the bolt and the fastened member are in the elasticity area, the hardness of the fastened member is lower than that of the bolt, and/or the rate of thermal expansion of the fastened member is greater than that of the bolt. Herein, in the event that the external force such as the thermal stress acts, the fastened member has a tendency that its bolt's seat face easily yields (plastic deformation). In FIG. **1**, the move from P1 to P2 means that the fastened member (the point P1) which substantially rests in the elasticity area moves to the point P2 in the plasticity area according to the yieldingness (plastic deformation) of the bolt's seat face due to the external force such as the thermal stress. Then, if the external force is removed (e.g., removal of the thermal stress), the fastening shaft force may decrease because the fastened member has had the plastic deformation and could not return its original shape state. In FIG. 2, the move from the point P2 to a point P3 means that the fastened member (the point P2), which has had the plastic deformation, elastically contracts due to the removal of the external force and moves to a stable position (P3) on another elasticity line L2 (elasticity line after the plastic deformation) which is different from an original elasticity line L1 (area under the elasticity limit of torque characteristics line). The point P3 is determined as an intersecting point between the elasticity line L2 and a straight line m. The gradient of the straight line m is determined by the rigidity of the fastened member. The point P3 can be obtained by drawing the straight line m from the point P1 (intersection with a desired fastening shaft force) on the elasticity line L1, which corresponds to the desired fastening shaft force. As apparent from the position of this point P3, in the event that the fastened member (the point P2), which has had the plastic deformation, elastically contracts (P3) due to the removal of the external force, the fastening shaft force decreases below the fastening shaft force of the initial point P1.
   Herein, according to the bolt fastening method of the embodiment, at first the bolt is fastened by an initial fastening angle θ1 from a seating point P0 (calculated from the torque gradient of the torque characteristics line) so as to reach a point Pθ1 (plastic deformation area) by way of the elasticity area on the torque characteristics line in order to make the bolt's seat face (fastened member) have the yieldingness (plastic deformation) as shown in FIG. **2**. Then, the bolt is unfastened (or turned in unfastening direction by a specified (predetermined or predeterminable) degree) so as to return towards or to a point Pθd in the elasticity area. Thereby, the state of the bolt's seat face takes movement (expansion, contraction) on the elasticity line L2 after the plastic deformation relative to the external force. The elasticity area of the elasticity line L2 after the plastic deformation is, as apparent from comparison with the original elasticity line L1, expanded more than the elasticity area of the original elasticity line L1, resulting in the higher limit of the yieldingness (elasticity limit). Herein, while the point Pθd is in the state (attachment state) in which the specified (predetermined or predeterminable) fastening shaft force is ensured at the blot's seat face, a direct returning from the point Pθ1 to the point Pθd may be adopted for the promptness. Or, from viewpoints of accuracy and precision, the bolt may be unfastened so as to be the zero fastening shaft force (seating point P0') once and then the bolt may be fastened so as to reach the point Pθ2 on the elasticity line L2 after the plastic deformation.

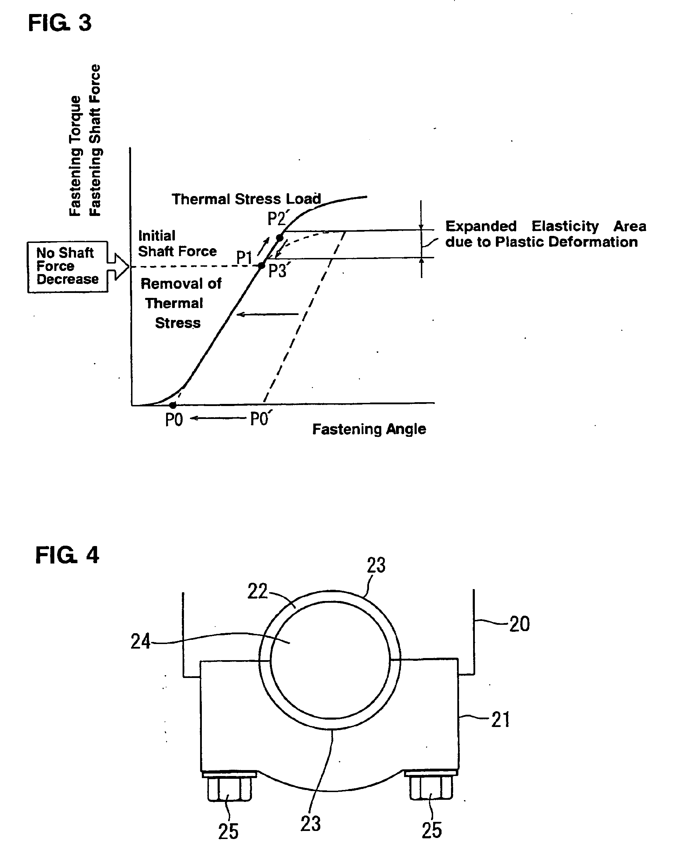

   FIG. **3** shows the torque characteristics line after the plastic deformation (illustrated by a solid line in the figure), in which the seating point P0' on the elasticity line L2 after the plastic deformation is shifted to the seating point P0 on the original torque characteristics line before the plastic deformation. As apparent from FIG. 3, the yieldingness limit of the bolt's seat face (fastened member) is made higher, so that even if the acting of the external force such as the thermal stress causes a movement from the point P1 to a point P2', the point P2' still rests in the elasticity area expanded. Thus, since the elastic contraction on the torque characteristics line after the plastic deformation (the solid line in FIG. 3) occurs when the external force is removed, a point P3' which moves from the point P2' according to the elastic contraction reaches substantially the same position as the initial point P1. As a result, the bolt's fastening shaft forces of the points P3', P1 are the same as each other, so that the bolt's fastening force may not decrease due to the external force such as the thermal stress.
[3] According to the bolt fastening method of the embodiment, the bolt and fastened member in which the hardness of the bolt is higher than that of the fastened member may be preferably used. Because the circular shape of the shaft hole can be maintained properly, preventing the deformation (yieldingness) of the fastened member and the decrease of the fastening shaft force of the bolt. In this case, a steel bolt or the like may be preferably used, and the fastened member which is made of a light alloy or metal, such as aluminum or magnesium, may be preferably used.
[4] According to the bolt fastening method of the embodiment, the bolt and fastened member in which the rate of thermal expansion of the fastened member is greater than that of the bolt may be preferably used. Because, the elasticity limit (limit of yieldingness resistance) of the fastened member increases (the elasticity area expands), so that the plastic deformation of the fastened member which may occur at the thermal stress loading (thermal expansion) can be properly restrained. Accordingly, the improper decrease of the bolt's fastening shaft force due to the plastic deformation at the removal of the thermal stress can be prevented, resulting in the stable fastening shaft force of the bolt.

Next, the bolt fastening method according to the above-described embodiment, which is applied to a case in which an attachment body **20** of an engine cylinder body and a bearing cap **21** (fastened member) are fastened with one or more bolts **25**, will be described.

At first, a general structure of the attachment body **20**, the bearing cap **21**, and others and relationships of these will be described referring to FIG. **4**. The attachment body **20** and the bearing cap **21** constitute a bearing for a crankshaft **24**. A shaft hole **22** is formed between the attachment body **20** and the bearing cap **21**. At least one pair of (preferably substantially half-shell) metal bearings **23** is disposed in this shaft hole so as to substantially enclose the crankshaft **24** circularly. Each (half-shell) metal bearing **23** preferably has a shape which is formed by dividing a substantially cylindrical member into pieces along its diameter. However, it should be understood that the metal bearings may be formed to have shapes different from one another and/or three or more metal bearings may be provided. The attachment body **20** and the bearing cap **21** are fastened together with the bolts **25** in a state in which the half-shell metal bearings **23** and the crankshaft **24** are disposed in the shaft hole **22**.

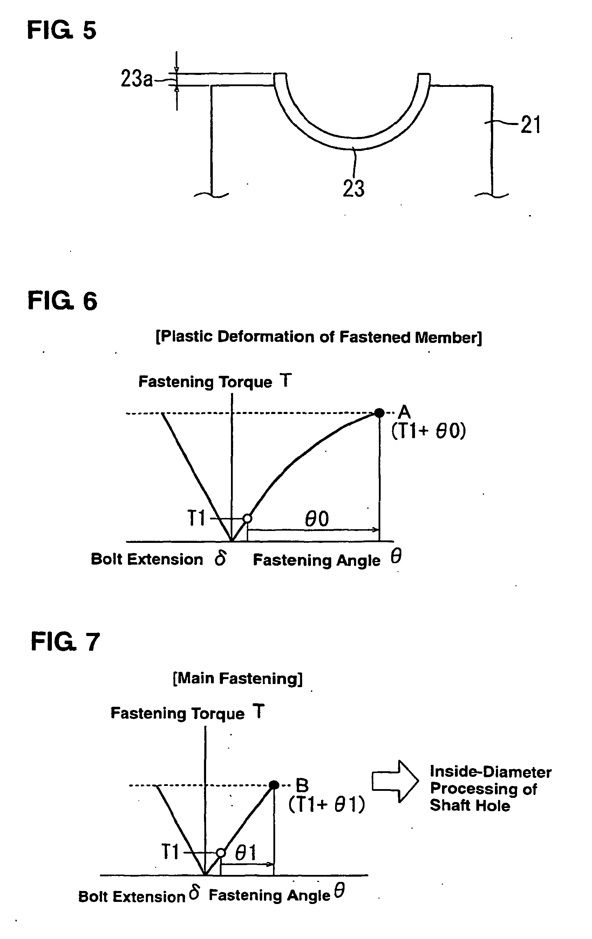

Herein, the attachment body **20** and the bearing cap **21** are formed such that an outer periphery of the combined (half-shell) metal bearings **23** is slightly bigger than an inside periphery of the shaft hole **22** before they are fastened. Accordingly, in a state in which the one of the (half-shell) metal bearings **23** is disposed at the bearing cap **21** as shown in FIG. **5**, an end of the (half-shell) metal member **23** preferably projects slightly from the bearing cap **21** (as a preferred crushable height portion **23**a). When the bearing cap **21** is fastened to the attachment body **20** with the bolts, the crushable height portion **23a** is compressed and substantially crushed or deformed. Thereby, the heat radiation of the crank system can be promoted, and the (half-shell) metal bearings **23** preferably can be prevented from rotating together with the crankshaft **24**. Further, the close disposition of the half-shell metal bearings **23** to the shaft hole **22** can be improved, and the half-shell metal bearings **23** can have a proper tension therein.

A small gap (clearance) exits between the half-shell metal bearings **23** and the crankshaft **24**. Improperly large clearance may cause inappropriate vibrations and noises, while improperly small clearance may cause lack of smooth lubrication between the crankshaft **24** and the bearings **23**.

An assembling structure of the attachment body **20** and the bearing cap **21** may be obtained through the following method. At first, the attachment body **20** and the bearing cap (fastened member) **21** are fastened in the elasticity area such that the bearing cap **21** (bolt's seat face) preferably has the plastic deformation (initial fastening step). In this case, the torque + angle method is used as the elasticity-area bolt fastening as shown in FIG. **6**. Herein, the bolt is fastened to a snug torque (a fastening torque at the start of effective (substantial) fastening) T1, and then the bolt is fastened further by a specified angle θ0 from a standard fastening angle corresponding to the snug torque T1. Through this process, the fastening state substantially reaches a point A on the torque characteristics line shown in FIG. **6**. Herein, a certain amount of angle as the above-described specified angle θ0 is used which can cause the plastic deformation to the bolt's seat face of the bearing cap **21** as the fastened member and make the bolts **25** rest in the elasticity area.

Next, the bolts **25** are unfastened by a specified (predetermined or predeterminable) amount, preferably substantially completely (a bolt unfastening step). Then, the same or similar elasticity-area fastening (the torque + angle method) as the above-described elasticity-area fastening is conducted so as to fasten the attachment body **20** and the bearing cap **21** (the main fastening: the point B in FIG. **7**). Under this state, the inside-diameter processing of the shaft hole **22** is conducted. In this case, as the fastening by the torque + angle method, after the bolts are fastened to the snug torque T1, the bolts are fastened by a specified (predetermined or predeterminable) angle (main fastening angle) θ1 from the standard fastening angle corresponding to the snug torque T1. Herein, the specified (predetermined or predeterminable) angle θ1 preferably is set to be smaller than the specified (predetermined or predeterminable) angle θ0 of the above-described initial fastening step. In this case, relationships between the fastening torque T and the fastening angle θ show a substantially linear proportion as shown in FIG. **7**.

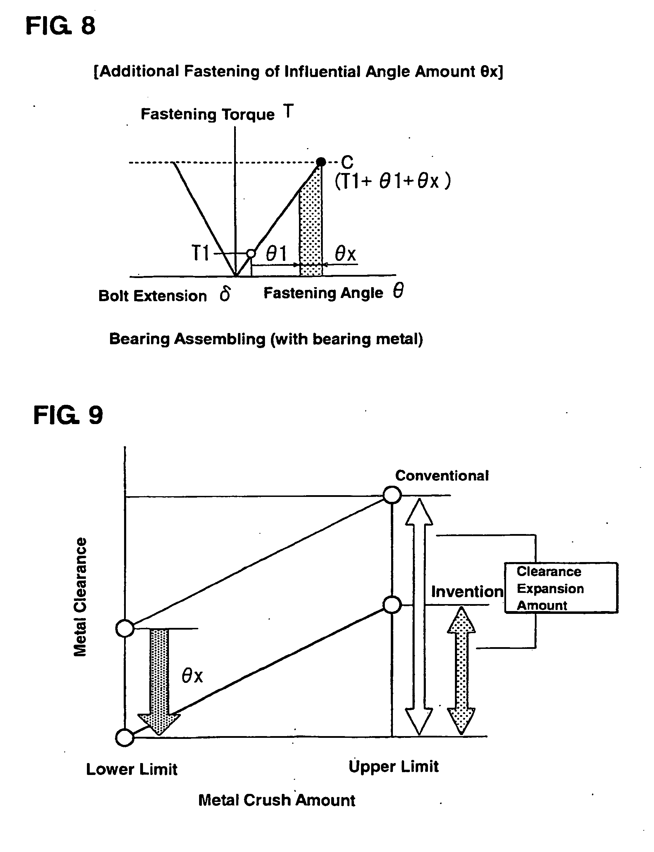

Subsequently, the bolts are removed once and then fastened again in a state in which the (half-shell) metal bearings **23** and the crankshaft **24** are disposed in the shaft hole **22** (an assembling step). Herein, the bolts are fastened by adding an influential angle amount (θx : a preferably constant angle) of the minimum of a previously-obtained metal crush amount to the fastening angle of the point B (see FIG. 7) before processing the inside diameter of the shaft hole **22** (see a point C in FIG. **8**). Thus, the fastening conditions at the assembling are the sum of the fastening angle to reach the snug torque T1, the specified angle θ1, and the influential angle amount θx. That is, the fastening conditions at the assembling = T1 + θ1 + θx. Accordingly, the bolts are always fastened in the elasticity area, the fastening shaft force of the final bolt fastening point C is greater than that of the point B, and the bolt fastening shaft force rests in the elasticity area of the fastened member.

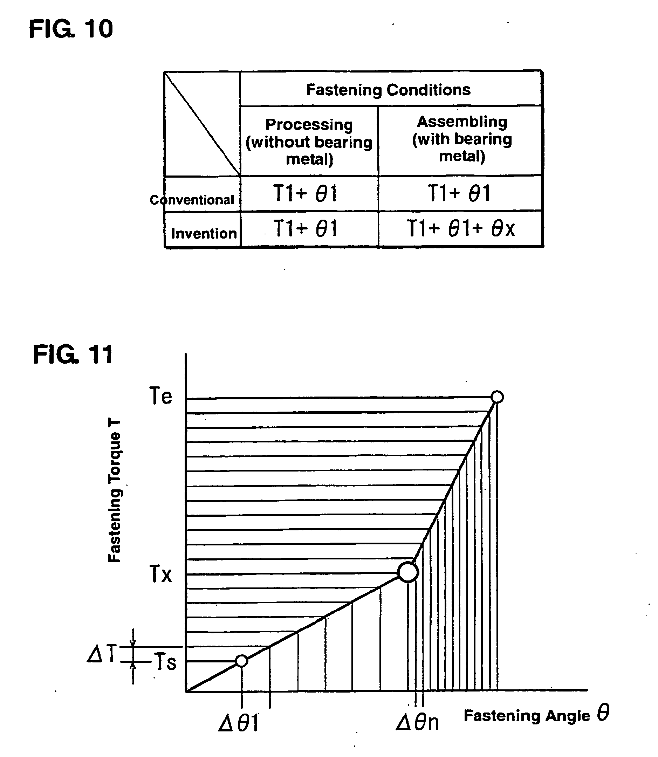

Herein, the above-described influential angle amount θx of the minimum of the metal crush amount is an additional fastening angle which may be necessary to restrain the metal clearance expansion amount at the low limit of the metal crush amount to ensure the smooth lubrication between the bearing and the crankshaft (see FIGS. **9** and **10**). Examples of the method for obtaining the influential angle amount θx may be as follows. Herein, in FIG. **9** the lower limit of the metal crush amount is the combination (sum) of an upper limit of the bearing's inside diameter (inside diameter of the shaft hole 20) and the lower limit of the crush height portion **23a**. The upper limit of the metal crush amount is the combination (sum) of the lower limit of the bearing's inside diameter (the inside diameter of the shaft hole **20**) and the upper limit of the crush height portion **23a**.

### EXAMPLE 1 (FIGS. 10 and 11)

An example 1 is a method for obtaining the influential angle amount θx by fastening an actual component (the bearing cap) with the combination of the inside-diameter upper-limit bearing and the crush-height lower-limit metal. At first, a standard torque Ts, an angle sampling torque ΔT, a fastening completion torque Te are set or defined respectively. Then, the fastening of the bolt is started, and when the fastening torque has reached the standard torque Ts, the sampling of fastening angle Δθ for each torque ΔT is started (any type of the torque method and the torque + angle method may be used as the fastening method).

Next, the ratio of Δθn (a value of Δθ after the sampling time) to Δθ1 (initial value), (i.e., Δθn/Δθ1) is monitored. A point where this ratio starts changing below a threshold K1 is obtained as a variation torque Tx. Then, after the fasting has been conducted up to the variation torque Tx, the influential angle amount θx is obtained with an angle difference θe between the variation torque Tx and the fastening completion torque Te. That is, θx = (Tx x θe) / (Te - Tx).

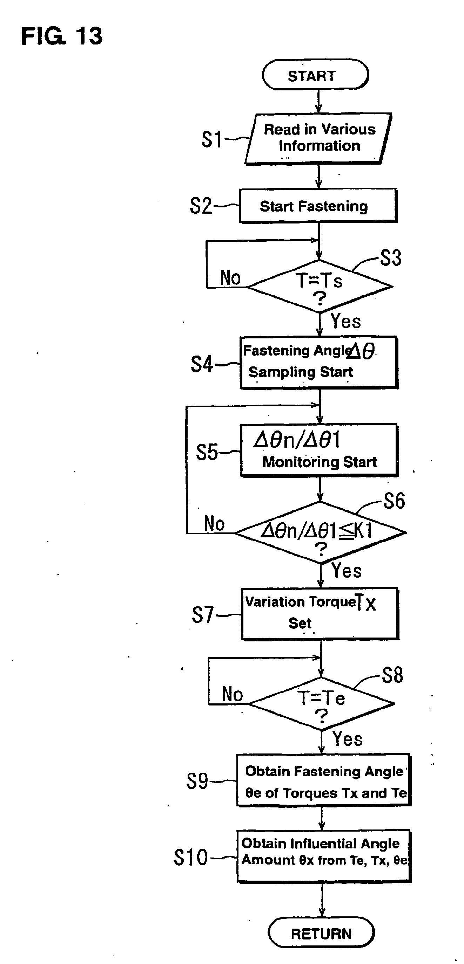

FIG. **13** is a flowchart specifically explaining the obtaining or determination of the influential angle amount θx according to the example 1. First, various information of the standard torque Ts, angle sampling torque ΔT and fastening completion torque Te are read in (various information setting), and the bolt fastening is started (**S1, S2**). After the bolt fastening start, it is determined whether the fastening torque has reached the standard torque Ts or not (**S3**). When it is determined that the fastening torque has reached the standard torque Ts, the sampling of fastening angle Δθ (n = 1, 2, 3...) for each torque ΔT is started and the monitoring of the initial value Δθ1 of the fastening angle Δθ and each sampling value Δθn / Δθ1 (**S4, S5**). Then, the determination as to whether the value of Δθn / Δθ1 is below the threshold K1 or not is made consciously (i.e. it is determined whether or not the value of Δθn / Δθ1 is below the threshold K1). When the value of Δθn / Δθ1 becomes substantially equal to the threshold K1 or smaller, the torque at the point where the changing starts is set as the variation torque Tx (**S6, S7**).

After this, the bolt is fastened up to the fastening completion torque Te (**S8**), and the fastening angle difference θe between the fastening angle θ at the point of the fastening completion torque Te and the variation torque Tx is calculated (**S9**). Then, in step **S10**, the influential angle amount θx is obtained, using Te, Tx of the step **S7** and θe of the step **S9**, by the equation: θx = (Tx x θe) / (Te - Tx).

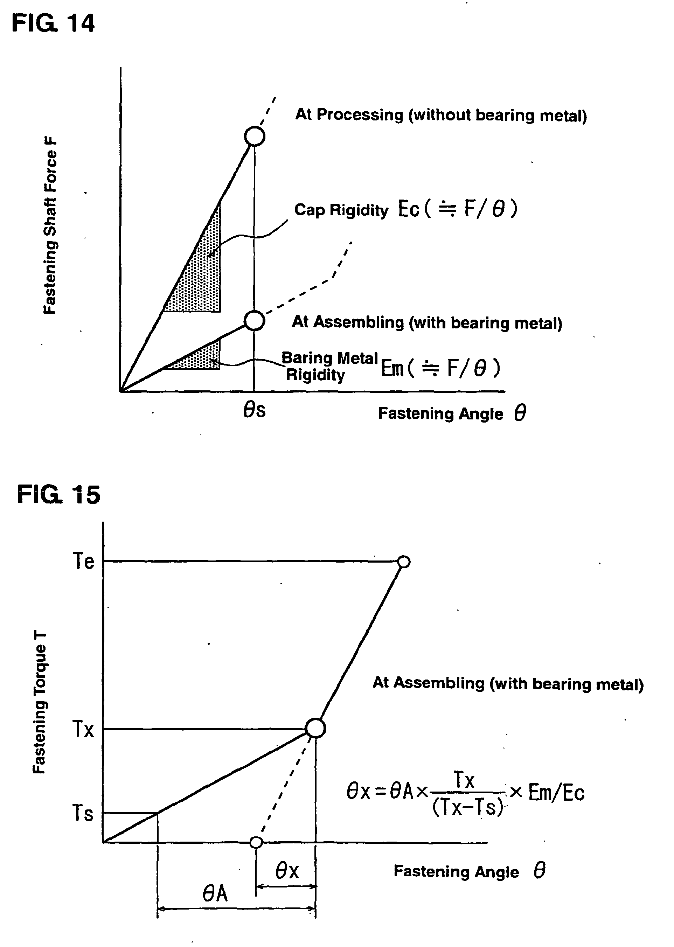

### EXAMPLE 2 (FIGS. 14 and 15)

An example 2 is a method for obtaining the influential angle amount θx from the fastening rigidity ratio between the bearing cap and the metal bearing by conducting the fastening analysis at the times of processing (without the metal bearing) and assembling (with the metal bearing) of the actual component with the combination of the inside-diameter upper-limit bearing and the crush-height lower-limit metal. At first, the actual component at the times of processing (without the metal bearing) and assembling (with the metal bearing) is fastened by the constant angle θs with the angle method, and the fastening rigidity of the bearing cap Ec, which is nearly equal to F (fastening shaft force) / θ (fastening angle), and the fastening rigidity of the metal bearing Em, which is nearly equal to F (fastening shaft force) / θ (fastening angle), are obtained (see FIG. **14**). Meanwhile, the variation torque T is obtained according to the above-described example 1, and a fastening angle θA from the standard torque Ts to the variation torque Tx is obtained based on the fastening angle at the standard torque Ts and the fastening angle at the variation torque Tx. After this, the influential angle amount θx is obtained, using Ts, Tx, θA, Em and Ec, by the equation: θx = θA x Tx / (Tx - Ts) x Em / Ec (see FIG **15**). Herein, the fastening rigidity ratio of the bearing cap and the metal bearing may be substituted by each calculation value.

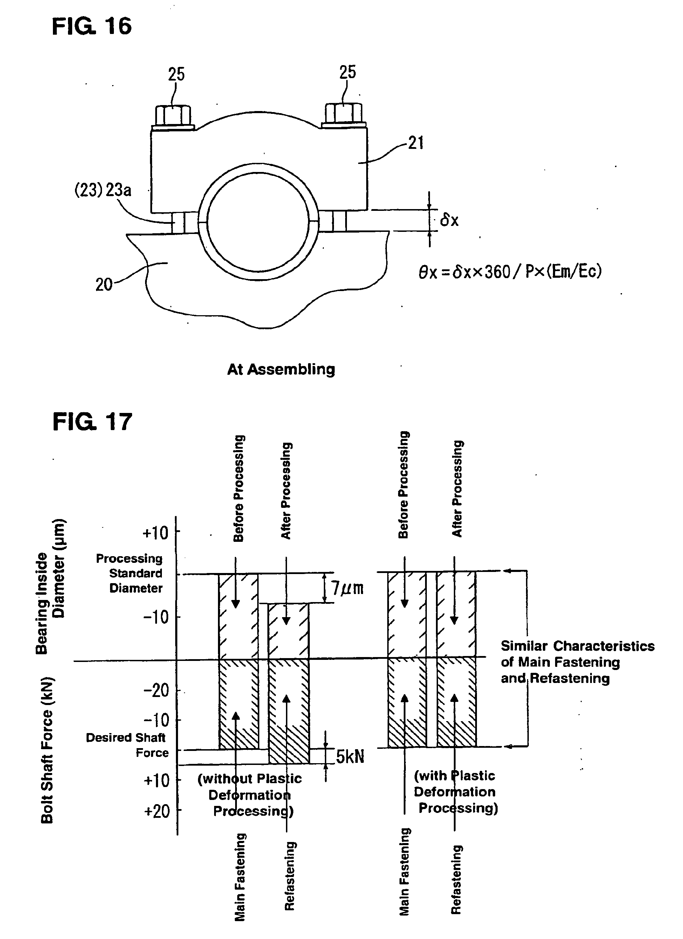

### EXAMPLE 3 (FIGS. 16)

An example 3 is a method for obtaining the influential angle amount θx from the gap of the bearing cap and the fastening rigidity ratio between the bearing cap and the metal bearing of the actual component with the combination of the inside-diameter upper-limit bearing and the crush-height lower-limit metal. At first, the gap δx between the attachment body **20** and the bearing cap **21** with the combination of the inside-diameter upper-limit bearing and the crush-height lower-limit metal (see FIG. **16**). Meanwhile, the fastening rigidities Ec, Em of the bearing cap **21** and metal bearing **23** are obtained by the method described in the above-described example 2. After this, the influential angle amount θx is obtained, using the gap δx between the attachment body **20** and the bearing cap **21** and the fastening rigidities Ec, Em of the bearing cap **21** and metal bearing **23** by the equation: θx = δx x 360 / P x (Em / Ec ). Herein, the fastening rigidity ratio of the bearing cap and the metal bearing may be substituted by each calculation value.

Effects of the above-described fastening method of the bearing cap **21** were as follows.

### (1) Stability of Inside Diameter of Bearing in accordance with Presence of Plastic Deformation Step of Bearing Cap 21 as Fastened Member

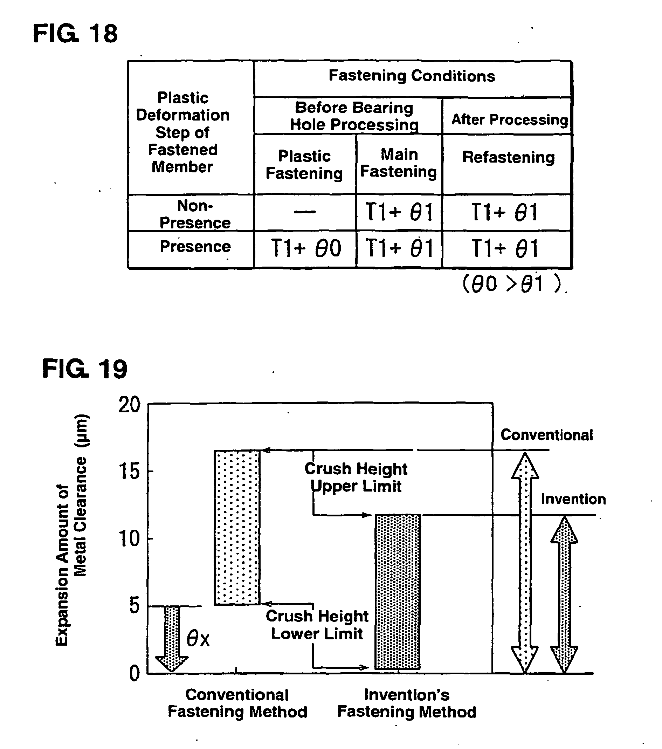

FIG. **17** shows results of stability of the inside diameter of the bearing at the processing (without the metal bearing) and the refastening in accordance with presence of the plastic deformation step (the elasticity-area bolt fastening) of the bearing cap **21** as the fastened member. FIG. **18** shows conditions of this fastening. These show that the presence of the plastic deformation step of the bearing cap 21 greatly improved the stability of the inside diameter of the bearing at the refastening and ensured the circular shape of the shaft hole **22** and the like properly.

### (2) Clearance at Additional Fastening of Influential Angle Amount θx

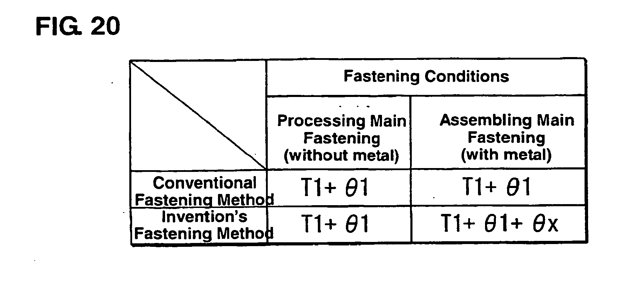

At the assembling of the metal bearing, the clearance could be properly prevented from expanding by conducting the additional fastening of T1 + θ1 + θx, which was obtained by adding the influential angle amount θx (constant angle) of the metal crush to the main-fastening conditions T1 + θ1 before the processing of the shaft hole 22 (see FIGS. **19** and **20**).

### (3) Stability of Shaft Force according to Improvement of Elasticity Fastening Bolt and Elasticity Limit of Bearing Cap 21 as Fastened Member

The bolt was used as the elasticity fastening bolt, so that the bolt did not have any plastic deformation caused by the thermal stress during the engine operation after the bearing assembling. Meanwhile, since the elasticity limit of the bolt's seat face of the bearing cap **21** as the fastened member increased (the elasticity area expands) due to the plastic deformation, the yieldingness (plastic deformation) of the seat face was properly prevented from progressing (see FIG. **3**). Thus, the decrease of the fastening shaft force caused by the plastic deformation due to the thermal stress was prevented despite the removal of the thermal stress (see FIG. **1** showing the general contents). As a result, the stable bolt fastening shaft force could be obtained.

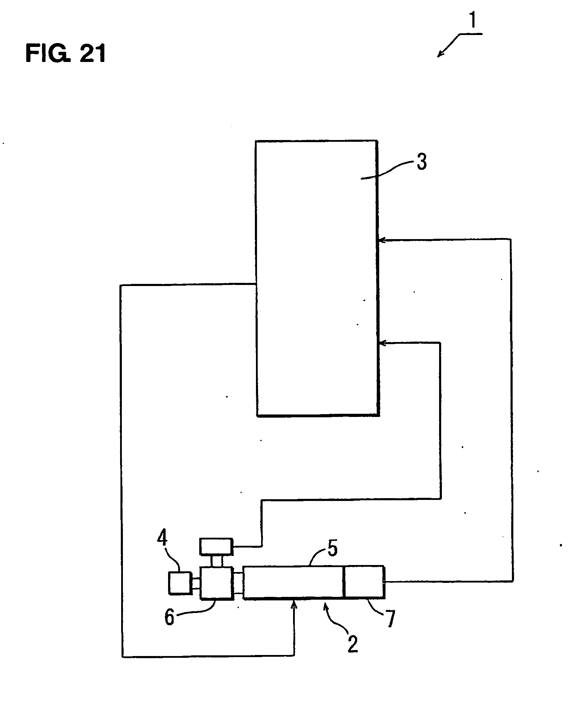

Next, a bolt fastening apparatus using the bolt fastening method of the above-described embodiment will be described. The bolt fastening apparatus **1** comprises a nut runner **2** as the preferred bolt rotating device and a control unit **3** operative to control the nut runner **2** as shown in FIG. **21**. The nut runner **2** comprises a socket **4** operative to engage with a head portion of the bolt, a drive motor (bolt fastening adjusting device) **5** operative to rotate the socket **4**, a torque transducer (torque detecting device) **6** operative to detect the torque loaded to the bolt by the socket **4**, and an angle encoder (as a preferred fastening angle detecting device) **7** operative to measure or determine the bolt's fastening angle preferably by detecting or determining the rotational angle of the drive motor **5**.

The control unit **3** receives a torque signal from the torque transducer **6** and a fastening angle signal from the angle encoder **7**, and outputs a control signal to the drive motor **5** of the nut runner **2**. The control unit **3** includes a fastening amount control device, which outputs the control signal based on control contents which is previously stored therein, checking the torque signal from the torque transducer **6** and a fastening angle signal from the angle encoder **7**.

The present invention should not be limited to the above-described embodiment, and any other modifications and improvements may be applied within the scope of the claims.

## Claims

1. A bolt fastening method of fastening a fastened member (**21**) with a bolt (**25**), comprising :
an initial fastening step, in which the bolt (**25**) is fastened in an elasticity area thereof such that the fastened member (**21**) has a plastic deformation; **characterized by**
a final fastening step, in which the bolt (**25**) is unfastened by a specified amount from a state of the bolt (**25**) fastened in said initial step and then the bolt (**25**) is fastened again in a state in which each of the bolt (**25**) and the fastened member (**21**) rests in an elasticity area thereof, whereby the fastened member (**21**) can be fastened with the bolt (**25**).

2. The bolt fastening method of claim 1, wherein said final fastening step follows said initial fastening step.

3. The bolt fastening method of claim 1, further comprising a bolt unfastening step in which the bolt (**25**) is unfastened to zero of a fastening shaft force thereof, which is provided after said initial fastening step and before said final fastening step, wherein said final fastening step is configured such that the bolt (**25**) is fastened again with a smaller fastening angle than in said initial fastening step.

4. The bolt fastening method of any one of the preceding claims, wherein said fastened member comprises a bearing cap (**21**) to be attached to an attachment body (**20**) and the bearing cap (**21**) is fastened to the attachment body (**20**) with the bolt (**25**) in said final fastening step, a processing step of processing a shaft hole (**22**) between the bearing cap (**21**) and the attachment body (**20**) is provided after the final fastening step.

5. The bolt fastening method of claim 4, wherein after the processing step is provided an assembling step of attaching the bearing cap (**21**) to the attachment body (**20**), in which the bolt (**25**) fastening the bearing cap (**21**) is unfastened, at least one pair of half-shell metal bearings (**23**, **23**) preferably having a crushable height portion (**23a**) is disposed in the shaft hole (**22**), and then the bolt (**25**) is fastened so as to attach the bearing cap **(21**) to the attachment body (**20**), fastening of the bolt (**25**) in the assembling step being conducted in the elasticity area of the bolt (**25**) by applying a specified fastening angle to the bolt (**25**) which is obtained by adding to a bolt fastening angle in the processing step an additional fastening angle which preferably is large enough to crush a crushable-height portion (**23a**) of the half-shell metal bearings (**23**).

6. The bolt fastening method of any one of the preceding claims, wherein the hardness of the bolt (**25**) is higher than that of the fastened member (**21**).

7. The bolt fastening method of any one of the preceding claims, wherein the rate of thermal expansion of the fastened member (**21**) is greater than that of the bolt (**25**).

8. A computer program product comprising computer-readable instructions which, when loaded and executed on a suitable apparatus, control the apparatus to perform a bolt fastening method of fastening a fastened member (**21**) with a bolt (**25**) of any one of the preceding claims.

9. A bolt fastening apparatus (**1**) of fastening a fastened member (**21**) with a bolt (**25**), comprising:
a bolt-fastening adjusting device (**5**) operative to adjust fastening of the bolt (**25**),
a fastening-amount control device (**3**) operative to control said bolt-fastening adjusting device (**5**) in such a manner that the bolt (**25**) is fastened in an elasticity area thereof such that the fastened member (**21**) has a plastic deformation, then the bolt (**25**) is unfastened and **characterized in that** then the bolt (**25**) is fastened again in a state in which each of the bolt (**25**) and the fastened member (**21**) rests in an elasticity area thereof to provide a final fastening state of the fastened member (**21**) with the bolt (**25**).

10. The bolt fastening apparatus (**1**) of claim 9, wherein said fastening-amount control device (**3**) is configured such that fastening of the bolt (**25**) after the plastic deformation of the fastened member (**21**) produces the final fastening state.

11. The bolt fastening apparatus (**1**) of claim 9, wherein said fastening-amount control device (**3**) is configured such that the bolt (**25**) is unfastened to zero of a fastening shaft force thereof when the bolt (**25**) is unfastened, and the bolt (**25**) is fastened with a smaller fastening angle than in fastening the bolt (**25**) to make the fastened member (**21**) have the plastic deformation when the final fastening state is provided.

## Patentansprüche

1. Bolzenbefestigungsverfahren zum Befestigen eines befestigten Glieds (21) mit einem Bolzen (25), umfassend:
einen anfänglichen Befestigungsschritt, bei dem der Bolzen (25) in einem Elastizitätsbereich davon derart befestigt wird, dass das befestigte Glied (21) eine plastische Verformung aufweist; **gekennzeichnet durch**
einen abschließenden Befestigungsschritt, bei dem der Bolzen (25) um einen spezifizierten Betrag aus einem Zustand des Bolzens (25), der in dem Anfangsschritt befestigt wird, gelockert bzw. gelöst wird, und dann der Bolzen (25) wieder in einem Zustand befestigt wird, in dem jeder von dem Bolzen (25) und dem befestigten Glied (21) in einem Elastizitätsbereich davon ruht, wodurch das befestigte Glied (21) mit dem Bolzen (25) befestigt werden kann.

2. Bolzenbefestigungsverfahren nach Anspruch 1, wobei der abschließende Befestigungsschritt auf den anfänglichen Befestigungsschritt folgt.

3. Bolzenbefestigungsverfahren nach Anspruch 1, ferner umfassend einen Bolzenlockerungs- bzw. -löseschritt, bei dem der Bolzen (25) auf Null einer Befestigungsschaftkraft davon gelockert bzw. gelöst wird, der nach dem anfänglichen Befestigungsschritt und vor dem abschließenden Befestigungsschritt vorgesehen ist, wobei der abschließende Befestigungsschritt derart konfiguriert ist, dass der Bolzen (25) wieder mit einem kleineren Befestigungswinkel befestigt wird als in dem anfänglichen Befestigungsschritt.

4. Bolzenbefestigungsverfahren nach einem der vorhergehenden Ansprüche, wobei das befestigte Glied eine Lagerkappe (21) umfasst, die an einem Anbringungskörper (20) anzubringen ist, und die Lagerkappe (21) in dem abschließenden Befestigungsschritt mit dem Bolzen (25) an dem Anbringungskörper (20) angebracht wird, wobei ein Bearbeitungsschritt des Bearbeitens eines Schaftlochs (22) zwischen der Lagerkappe (21) und dem Anbringungskörper (20) nach dem abschließenden Befestigungsschritt vorgesehen ist.

5. Bolzenbefestigungsverfahren nach Anspruch 4, wobei nach dem Bearbeitungsschritt ein Montageschritt des Anbringens der Lagerkappe (21) an dem Anbringungskörper (20) vorgesehen ist, bei dem der Bolzen (25), der die Lagerkappe (21) befestigt, gelöst wird, wobei zumindest ein Paar Halbschalenmetalllager (23, 23), die vorzugsweise einen zerdrückbaren bzw. knautschbaren bzw. zerbrechbaren Höhenabschnitt (23a) aufweisen, in dem Schaftloch (22) angeordnet ist, und der Bolzen (25) dann befestigt wird, um die Lagerkappe (21) an dem Anbringungskörper (20) anzubringen, wobei das Befestigen des Bolzens (25) in dem Montageschritt in dem Elastizitätsbereich des Bolzens (25) durchgeführt wird, indem ein spezifizierter Befestigungswinkel auf den Bolzen (25) angewendet wird, der erhalten wird, indem zu einem Bolzenbefestigungswinkel in dem Bearbeitungsschritt ein zusätzlicher Befestigungswinkel addiert wird, der vorzugsweise groß genug ist, um einen zerdrückbaren bzw. knautschbaren bzw. zerbrechbaren Höhenabschnitt (23a) der Halbschalenmetalllager (23) zu zerdrücken bzw. zu knautschen bzw. zu zerbrechen.

6. Bolzenbefestigungsverfahren nach einem der vorhergehenden Ansprüche, wobei die Härte des Bolzens (25) höher ist als diejenige des befestigten Glieds (21).

7. Bolzenbefestigungsverfahren nach einem der vorhergehenden Ansprüche, wobei Wärmeausdehnungsrate des befestigten Glieds (21) größer ist als diejenige des Bolzens (25).

8. Computerprogrammprodukt umfassend computerlesbare Instruktionen, die, auf einer Vorrichtung geladen und ausgeführt, die Vorrichtung dahingehend steuern bzw. regeln, ein Bolzenbefestigungsverfahren zum Befestigen eines befestigten Glieds (21) mit einem Bolzen (25) nach einem der vorhergehenden Ansprüche durchzuführen.

9. Bolzenbefestigungsvorrichtung (1) zum Befestigen eines befestigten Glieds (21) mit einem Bolzen (25), umfassend:
eine Bolzenbefestigungseinstelleinrichtung (5), die wirksam bzw. betriebsfähig ist, das Befestigen des Bolzens (25) einzustellen,
eine Befestigungsbetragssteuer- bzw. -regeleinrichtung (3), die wirksam bzw. betriebsfähig ist, um die Bolzenbefestigungseinstelleinrichtung (5) auf eine solche Weise zu steuern bzw. zu regeln, dass der Bolzen (25) in einem Elastizitätsbereich davon derart befestigt wird, dass das befestigte Glied (21) eine plastische Verformung aufweist, wobei der Bolzen (25) dann gelöst bzw. gelockert wird, und **dadurch gekennzeichnet, dass** der Bolzen (25) dann wieder in einem Zustand befestigt wird, in dem jeder von dem Bolzen (25) und von dem befestigten Glied (21) in einem Elastizitätsbereich davon ruht, um einen abschließenden Befestigungszustand des befestigten Glieds (21) mit dem Bolzen (25) bereitzustellen.

10. Bolzenbefestigungsvorrichtung (1) nach Anspruch 9, wobei die Befestigungsbetragssteuer- bzw. -regeleinrichtung (3) derart konfiguriert ist, dass das Befestigen des Bolzens (25) nach der plastischen Verformung des befestigten Glieds (21) den abschließenden Befestigungszustand erzeugt.

11. Bolzenbefestigungsvorrichtung (1) nach Anspruch 9, wobei die Befestigungsbetragssteuer- bzw. -regeleinrichtung (3) derart konfiguriert ist, dass der Bolzen (25) auf Null einer Befestigungsschaftkraft davon gelockert bzw. gelöst wird, wenn der Bolzen (25) gelöst wird, und der Bolzen (25) mit einem kleineren Befestigungswinkel befestigt wird als beim Befestigen des Bolzens (25), um zu bewirken, dass das befestigte Glied (21) die plastische Verformung aufweist, wenn der abschließende Befestigungszustand bereitgestellt wird.

## Revendications

1. Procédé de fermeture à verrou d'un élément fermé (21) avec un verrou (25), comprenant :
une étape de fermeture initiale, dans laquelle le verrou (25) est fermé dans une zone d'élasticité de celui-ci de telle sorte que l'élément fermé (21) comporte une déformation plastique ; **caractérisé par**
une étape de fermeture finale, dans laquelle le verrou (25) est débloqué par un niveau spécifié depuis un état du verrou (25) fermé dans ladite étape initiale et le verrou (25) est alors refermé dans un état dans lequel chacun du verrou (25) et de l'élément fermé (21) repose dans une zone d'élasticité de celui-ci, l'élément fermé (21) pouvant être fermé avec le verrou (25).

2. Procédé de fermeture à verrou selon la revendication 1, dans lequel ladite étape de fermeture finale est consécutive à ladite étape de fermeture initiale.

3. Procédé de fermeture à verrou selon la revendication 1, comprenant en outre une étape de déblocage à verrou dans laquelle le verrou (25) est débloqué jusqu'à zéro d'une force d'arbre de fermeture de celui-ci, laquelle étape est fournie après ladite étape de fermeture initiale et avant ladite étape de fermeture finale, dans laquelle ladite étape de fermeture finale est configurée de telle sorte que le verrou (25) est refermé avec un angle de fermeture inférieur à celui de ladite étape de fermeture initiale.

4. Procédé de fermeture à verrou selon l'une quelconque des revendications précédentes, dans lequel ledit élément fermé comprend un chapeau de palier (21) devant être fixé à un corps de fixation (20) et le chapeau de palier (21) est fixé au corps de fixation (20) avec le verrou (25) dans ladite étape de fermeture finale, une étape de traitement d'un trou d'arbre (22) entre le chapeau de palier (21) et le corps de fixation (20) est prévue après l'étape de fermeture finale.

5. Procédé de fermeture à verrou selon la revendication 4, dans lequel après l'étape de traitement est prévue une étape de montage consistant à fixer le chapeau de palier (21) sur le corps de fixation (20), dans laquelle le verrou (25) fixant le chapeau de palier (21) est débloqué, au moins une paire de paliers métalliques à demi-coussinets (22, 23) ayant de préférence une partie de hauteur écrasable (23a) placée dans le trou d'arbre (22), et le verrou (25) étant alors fermé de manière à fixer le chapeau de palier (21) au corps de fixation (20), à fixer le verrou (25) dans l'étape de montage exécutée dans la zone d'élasticité du verrou (25) en appliquant un angle de fermeture spécifié au verrou (25) qui est obtenu en ajoutant à un angle de fermeture du verrou dans l'étape de traitement un angle de fermeture supplémentaire qui est de préférence suffisamment grand pour écraser une partie de hauteur écrasable (23a) des paliers métalliques à demi-coussinets (23).

6. Procédé de fermeture à verrou selon l'une quelconque des revendications précédentes, dans lequel la dureté du verrou (25) est supérieure à celle de l'élément fermé (21).

7. Procédé de fermeture à verrou selon l'une quelconque des revendications précédentes, dans lequel le coefficient de dilatation thermique de l'élément fermé (21) est supérieur à celui du verrou (25).

8. Produit de programme informatique comprenant des instructions lisibles par ordinateur qui, une fois chargées et exécutées sur un appareil approprié, commandent l'appareil pour exécuter un procédé de fermeture à verrou consistant à fermer un élément fermé (21) avec un verrou (25) selon l'une quelconque des revendications précédentes.

9. Appareil de fermeture à verrou (1) d'un élément fermé (21) avec un verrou (25), comprenant :
un dispositif de réglage de fermeture à verrou (5) efficace pour régler la fermeture du verrou (25),
un dispositif de commande de niveau de fermeture (3) efficace pour commander ledit dispositif de réglage de fermeture à verrou (5) de telle sorte que le verrou (25) est fermé dans une zone d'élasticité de celui-ci de telle sorte que l'élément fermé (21) comporte une déformation plastique, alors le verrou (25) est débloqué et **caractérisé en ce que** le verrou (25) est alors refermé dans un état dans lequel chacun du verrou (25) et de l'élément fermé (21) repose dans une zone d'élasticité de celui-ci pour fournir un état de fermeture finale de l'élément fermé (21) avec le verrou (25).

10. Appareil de fermeture à verrou (1) selon la revendication 9, dans lequel ledit dispositif de commande de niveau de fermeture (3) est configuré de telle sorte que la fermeture du verrou (25) après la déformation plastique de l'élément fermé (21) produit l'état de fermeture finale.

11. Appareil de fermeture à verrou (1) selon la revendication 9, dans lequel ledit dispositif de commande de niveau de fermeture (3) est configuré de telle sorte que le verrou (25) est débloqué jusqu'à zéro d'une force d'arbre de fermeture de celui-ci lorsque le verrou (25) est débloqué, et le verrou (25) est fermé avec un angle de fermeture inférieur à celui de la fermeture du verrou (25) destiné à procurer la déformation plastique à l'élément fermé (21) lors de la fourniture de l'état de fermeture finale.
